# EUROPÄISCHE PATENTSCHRIFT

(11) **EP 0 896 568 B1**
(45) Veröffentlichungstag und Bekanntmachung des Hinweises auf die Patenterteilung: **19.06.2002**
(21) Anmeldenummer: 97921673.6
(22) Anmeldetag: 21.04.1997
(51) Int. Cl.: C01F 7/00, C01B 13/36, C01G 9/00, C08K 3/24

(54) **KATIONISCHE SCHICHTVERBINDUNGEN, DEREN HERSTELLUNG UND DEREN VERWENDUNG ALS STABILISATOREN FÜR HALOGENHALTIGE KUNSTSTOFFE**
CATIONIC LAMINAR COMPOUNDS AND THEIR PRODUCTION AND USE AS STABILIZERS FOR HALOGEN CONTAINING PLASTICS
COMPOSES STRATIFIES CATIONIQUES, LEUR PRODUCTION ET LEUR UTILISATION EN TANT QUE STABILISANTS POUR MATIERES PLASTIQUES HALOGENEES

(30) Priorität: 29.04.1996 DE 19617138
(43) Veröffentlichungstag der Anmeldung: 17.02.1999
(73) Patentinhaber: Cognis Deutschland GmbH & Co. KG, 40589 Düsseldorf (DE)
(72) Erfinder: LANGE, Ilona, D-40764 Langenfeld (DE); KLAMANN, Jörg-Dieter, D-27574 Bremerhaven (DE); FÖLL, Jürgen, D-40472 Düsseldorf (DE); WEDL, Peter, D-27568 Bremerhaven (DE); MARKS, Dieter, D-27612 Loxstedt (DE)
(86) Internationale Anmeldenummer: EP9701992
(87) Internationale Veröffentlichungsnummer: WO9741062

(56) Entgegenhaltungen:
- WO-A-92/17405
- WO-A-92/20619
- WO-A-95/21127
- GB-A- 1 185 920

## Beschreibung

### Gebiet der Erfindung

Die Erfindung betrifft spezielle kationische Schichtverbindungen vom Typ des Hydrotalcits, ein Verfahren zu deren Herstellung und deren Verwendung als Stabilisatoren für halogenhaltige Kunststoffe.

### Stand der Technik

Halogenhaltige Kunststoffe oder daraus hergestellte Formmassen neigen bekanntermaßen zu Abbau- beziehungsweise Zersetzungsreaktionen, wenn sie thermischer Belastung ausgesetzt sind oder mit energiereicher Strahlung, zum Beispiel Ultraviolettlicht, in Kontakt kommen. Um dem entgegenzuwirken werden sie üblicherweise mit Schwermetallverbindungen auf Basis von zum Beispiel Blei, Barium und/oder Cadmium ausgerüstet. Aus arbeitsphysiologischer Sicht besteht jedoch ein Bedürfnis, diese durchaus wirkungsvollen Stabilisatoren gegen weniger gesundheitsgefährdende Stoffe auszutauschen. Als Alternative zu den Schwermetallverbindungen kommen beispielsweise Calcium- und Zinkseifen als Stabilisatoren in Betracht, die jedoch nicht das Leistungsvermögen der genannten Schwermetallverbindungen erreichen, so daß zur Steigerung ihrer stabilisierenden Wirkung Co-Stabilisatoren benötigt werden.

In der deutschen Patentschrift **DE-C-30 19 632** (Kyowa Chemical Ind.) ist die Verwendung von Hydrotalciten zur Inhibierung des thermischen oder ultravioletten Abbaus von halogenhaltigen thermoplastischen Harzen beschrieben. In dieser Patentschrift werden Untersuchungsergebnisse mitgeteilt, die zeigen, daß, wenn man am Markt leicht erhältliche Hydrotalcite beispielsweise in Vinylchloridharze einarbeitet, diese Hydrotalcite die Entchlorierung der Harze beim Erhitzen beschleunigen oder sogar eine Zersetzung, Schwarzfärbung oder Schaumbildung der Harze bewirken. Zudem wurde festgestellt, daß diese Hydrotalcite eine schlechte Dispergierbarkeit in den Harzen haben und die rheologischen Eigenschaften der Harze während des Verformens sowie das Aussehen der fertigen Formkörper nachteilig beeinflussen. Diese Untersuchungsergebnisse werden auf die geringe Kristallgröße der gewöhnlichen Hydrotalcite sowie auf die große spezifische Oberfläche nach BET von mindestens etwa 50 m²/g und die Belegung der Hydrotalcitteilchen mit Wasser zurückgeführt. Demgemäß wird in der deutschen Patentschrift DE-C-30 19 632 vorgeschlagen, Hydrotalcite mit einem großen Kristallkorn und mit einer spezifischen Oberfläche nach BET von nicht mehr als 30 m²/g zu verwenden. Gewünschtenfalls können die Hydrotalcite mit einem anionischen oberflächenaktiven Mittel wie Natriumstearat belegt sein.

Auch in der europäischen Patentanmeldung **EP-A-189 899** (Kyowa Chemical Ind.) werden Harzzusammensetzungen beschrieben, die Hydrotalcite mit spezifischen Oberflächen nach BET kleiner 30 m²/g enthalten. Aus dieser europäischen Patentanmeldung ist bekannt, daß die Hydrotalcite modifiziert sein können mit höheren Fettsäureestern, anionischen oberflächenaktiven Mitteln und Kupplungsmitteln der Silan- oder Titan-Typen, um die Kompatibilität des Hydrotalcits mit den Kunststoffmassen zu verbessern. Die Modifizierung der Hydrotalcite soll gemäß EP-A-189 899 durch mechanisches Vermischen von Hydrotalciten mit den Modifizierungsmitteln in purer oder gelöster Form erfolgen.

Gemäß **DE-C-33 06 822** (Giulini Chemie) werden durch Umsetzen von Aluminiumhydroxid mit Magnesiumhydroxid oder Magnesiumoxid in Gegenwart von basischem Magnesiumcarbonat als Carbonat-Ionenspender bei einer Temperatur von 50 °C bis 100 °C und anschließender Sprühtrocknung aus der Suspension Hydrotalcite der Formel [Mg₆Al₂ (OH)₁₂](CO₃) ₂ . x H₂O - wobei x≥ 2 ist - erhalten. Aluminiumhydroxid wird dabei insbesondere in Form von "aktivem" Aluminiumhydroxid eingesetzt.

Die **US-A-4 656 156** (Aluminium Company of America) beschreibt ein Herstellverfahren für Hydrotalcit, wobei als Aluminiumkomponente die Aluminatlauge des Bayer-Prozesses verwendet wird. Die Bayer-Lauge wird dabei mit "aktivem" Magnesiumoxid umgesetzt, wie es beispielsweise durch Calcinierung von Magnesiumcarbonat erhalten werden kann. Ein Einsatz dieses Verfahrens ist wirtschaftlich nur an den Stellen sinnvoll, an denen die Bayer-Lauge selbst anfällt, da ansonsten auch hierbei größere Wassermengen transportiert werden müßten.

Die **DE-A-15 92 126** (Kyowa Chemical Ind.) beschreibt die Herstellung von Hydrotalciten aus unterschiedlichen Ausgangsstoffen, beispielsweise aus einer Aufschlämmung von festem Aluminiumhydroxid, festem Magnesiumhydroxid und Natriumhydrogencarbonat. Dabei werden die Umsetzungen chargenweise ausgeführt, und die Produkte werden von der Wasserphase durch Filtration oder durch Zentrifugieren abgetrennt und gewaschen, bevor sie getrocknet werden.

Gemäß **DE-C-44 25 266** (Metallgesellschaft AG) wird die dem Fachmann bekannte Thematik der Stabilisierung von halogenhaltigen Kunststoffen wie folgt umrissen: Halogenhaltige thermoplastische Harze wie Polyvinylchlorid (PVC) gehen bei der Verarbeitung - im Zuge einer Schmelzverformung - in Polyenstrukturen über, wobei Chlorwasserstoff (HCl) eliminiert wird. Dabei verfärbt sich das Polymer. Zur Verbesserung der Thermostabilität ist es üblich, Metallcarboxylate ("Metallseifen") als Stabilisatoren in das Harz einzuarbeiten. Da jedoch die Einarbeitung derartiger Substanzen als alleinige Stabilisatoren bei länger dauernden Schmelzverformungen zu einem sogenannten Metallverbrennen führen kann, die eine Schwarzfärbung des Polymeren hervorruft, ist es allgemeine Praxis, einen Co-Stabilisator zuzusetzen. Übliche Co-Stabilisatoren sind etwa Polyole, organische Phosphorigsäureester oder Epoxyverbindungen. Nach der Lehre der DE-C-44 25 266 lassen sich spezielle Lithium-haltige Schichtgitterverbindungen zur Stabilisierung von insbesondere PVC nutzen. Die Verwendung ähnlicher Lihaltiger Schichtgitterverbindungen zur Stabilisierung halogenhaltiger Kunststoffe lehrt im übrigen auch die **DE-A-44 25 275** (Metallgesellschaft AG).

WO 95/21127 beschreibt basische Schichtgitterverbindungen, sowie deren Verwendung zur Stabilisierung von halogenhaltigen Harzzusammensetzungen.

GB 1 185 920 beschreibt ein Verfahren zur Herstellung von Hydrotalciten, ausgehend von Suspensionen von Mg- und Al-Hydroxiden.

### Beschreibung der Erfindung

Die Aufgabe der vorliegenden Erfindung bestand darin, Stabilisatoren für halogenhaltige Kunststoffe bereitzustellen. Diese Stabilisatoren sollten sich im Vergleich zum bekannten Stand der Technik durch ein verbessertes Wirkungsprofil auszeichnen. Sie sollten insbesondere über folgende Eigenschaften verfügen:
- Gute Verträglichkeit mit Calcium- und/oder Zinkverbindungen.
- Dispergierbarkeit in halogenhaltigen Kunststoffen, ohne deren rheologische Eigenschaften nachteilig zu beeinflussen.
- Ausgeprägte Fähigkeit, die Zersetzungsprodukte von halogenhaltigen Kunststoffen gut abzufangen. Dies bedeutet insbesondere verbesserte Eigenschaften hinsichtlich der Fähigkeit, Chlorwasserstoff zu absorbieren.
- Verbesserung der Langzeitstabilität von halogenhaltigen Kunststoffen, insbesondere PVC (Polyvinylchlorid).

Gegenstand der vorliegenden Erfindung ist zunächst ein Verfahren zur Herstellung von kationische Schichtverbindungen wobei man Schichtverbindungen der allgemeinen Formel (I)

[EₑZ_{z}D_{d}Vᵥ(OH⁻)ₓ](Aⁿ⁻)ₐ · q H₂O (I)

worin bedeuten:
- E ein einwertiges Kation aus der Gruppe der Alkalimetalle,
- e eine Zahl im Bereich von 0 bis 2,
- Z ein zweiwertiges Metall-Kation,
- z eine Zahl im Bereich von 0 bis 6,
- D ein dreiwertiges Metall-Kation,
- d eine Zahl im Bereich von 0 bis 3,
- V ein vierwertiges Metall-Kation,
- v eine Zahl im Bereich von 0 bis 1,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und e + 2z + 3d + 4v = x + na ist,
in wäßrigem Milieu einer alkali-induzierten Reifung unterwirft. Dabei stellt man den Gehalt des wäßrigen Mediums an Alkalihydroxid im Bereich von 1- bis 6-molar, die Reifungstemperatur im Bereich von 60 bis 100 °C und die Reifungsdauer im Bereich von 2,5 bis 50 Stunden ein.

Ein besonderer Vorzug des erfindungsgemäßen Verfahrens besteht darin, daß es drucklos in einem offenen Reaktor durchgeführt werden kann. Dies ist insbesondere unter verfahrenstechnischen Gesichtspunkten besonders ökonomisch. Insbesondere sei in diesem Zusammenhang darauf hingewiesen, daß das erfindungsgemäße Verfahren keine hydrothermalen Bedingungen (also Temperaturen oberhalb von 100 °C und Drucke oberhalb von einer Atmosphäre) erfordert.

In einer Ausführungsform werden zur Durchführung des erfindungsgemäßen Verfahrens Schichtverbindungen der allgemeinen Formel (I) eingesetzt, bei denen v Null ist. Diese Schichtverbindungen lassen sich mithin durch die allgemeine Formel (I*) beschreiben:

[EₑZ_{z}D_{d}(OH⁻)ₓ](Aⁿ⁻)ₐ · q H₂O (I*)

worin bedeuten:
- E ein einwertiges Kation aus der Gruppe der Alkalimetalle,
- e eine Zahl im Bereich von 0 bis 2,
- Z ein zweiwertiges Metall-Kation,
- z eine Zahl im Bereich von 0 bis 6,
- D ein dreiwertiges Metall-Kation,
- d eine Zahl im Bereich von 0 bis 3,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und e + 2z + 3d = x + na ist.

In einer weiteren Ausführungsform werden zur Durchführung des erfindungsgemäßen Verfahrens Schichtverbindungen der allgemeinen Formel (I) eingesetzt, bei denen e Null ist. Diese Schichtverbindungen lassen sich mithin durch die allgemeine Formel (I**) beschreiben:

[Z_{z}D_{d}Vᵥ(OH⁻)ₓ](Aⁿ⁻)ₐ · q H₂O (I**)

worin bedeuten:
- Z ein zweiwertiges Metall-Kation,
- z eine Zahl im Bereich von 0 bis 6,
- D ein dreiwertiges Metall-Kation,
- d eine Zahl im Bereich von 0 bis 3,
- V ein vierwertiges Metall-Kation,
- v eine Zahl im Bereich von 0 bis 1,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und 2z + 3d + 4v = x + na ist.

In einer bevorzugten Ausführungsform werden zur Durchführung des erfindungsgemäßen Verfahrens Schichtverbindungen der allgemeinen Formel (I) eingesetzt, bei denen e und v jeweils Null sind. Diese Schichtverbindungen lassen sich mithin durch die allgemeine Formel (I***) beschreiben:

[Z_{z}D_{d}Vᵥ(OH⁻)ₓ](Aⁿ⁻)ₐ · q H₂O (I***)

worin bedeuten:
- Z ein zweiwertiges Metall-Kation,
- z eine Zahl im Bereich von 0 bis 6,
- D ein dreiwertiges Metall-Kation,
- d eine Zahl im Bereich von 0 bis 3,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und 2z + 3d = x + na ist.

Bei den Schichtverbindungen gemäß Formel (I***) handelt es sich um die dem Fachmann seit langem bekannten "klassischen" Hydrotalcite. Von diesen sind wiederum jene bevorzugt, bei denen D Aluminium, d die Zahl 1 und z eine Zahl im Bereich von 1 bis 5 bedeuten. Diese speziellen Hydrotalcite werden durch die allgemeine Formel (I****) charakterisiert:

[Z_{z}Al (OH⁻)ₓ](Aⁿ⁻)ₐ · q H₂O (I****)

worin bedeuten:
- Z ein zweiwertiges Metall-Kation,
- z eine Zahl im Bereich von 1 bis 5,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und 2z + 3 = x + na ist.

Das Wesen der vorliegenden Erfindung besteht darin, daß die Gitterstruktur beliebiger kationischer Schichtverbindungen (I) - insbesondere klassischer Hydrotalcite der allgemeinen Formeln (I***) und (I****) - eine Alkali-induzierte Modifizierung derart erfährt, daß einerseits eine Verbesserung der Kristallinität der Schichtverbindung resultiert, andererseits die Wirkung der so erhaltenen Schichtverbindungen als Co-Stabilisator für halogenhaltige Kunststoffe nachhaltig verbessert wird. Es ist dabei unkritisch, welchen Ursprungs die eingesetzte Schichtverbindung (I) ist. Sie kann sowohl natürlichen Ursprungs sein, als auch synthetisch hergestellt worden sein. Bei den synthetisch hergestellten Schichtverbindungen (I) wiederum spielt es keine Rolle, ob die Substanz als Feststoff eingesetzt wird, oder unmittelbar vor der Alkali-induzierten Reifung in situ hergestellt wurde und dementsprechend in Form einer wäßrigen Aufschlämmung vorliegt.

Das **Reifungsmedium** ist eine 1- bis 6-molare wäßrige AlkalihydroxidLösung. Vorzugsweise arbeitet man jedoch mit 3- bis 5- -molaren Lösungen. Die Art des Alkalihydroxids, das zur Bereitstellung des wäßrigalkalischen Milieus herangezogen wird, ist an sich nicht kritisch. In der Regel wird jedoch Natriumhydroxid verwendet.

Im Hinblick auf die **Reifungstemperatur** gilt folgendes: Man stellt eine Temperatur im Bereich von 60 bis 100 °C ein. Bevorzugt ist dabei ein Bereich von 70 bis 90 °C.

Im Hinblick auf die **Reifungszeit** gilt folgendes: Grundsätzlich arbeitet man im Bereich von 2,5 bis 100 Stunden. Bei einer Unterschreitung der angegebenen Untergrenze ist die angestrebte Verbesserung der Wirkeigenschaften der Schichtverbindungen nicht gewährleistet. Bei einer Überschreitung der angegebenen Obergrenze findet eine weitere Verbesserung der Wirkeigenschaften nur noch in sehr begrenztem Umfange statt und ist daher unökonomisch. Vorzugsweise arbeitet man mit Kristallisationszeiten im Bereich von 10 bis 20 Stunden.

Die **kationischen Schichtverbindungen (I)** sind an sich bekannte Verbindungen, deren Struktur und Herstellung beispielsweise von W. T. Reichle in **Chemtec (Januar 1986), Seiten 58-63,** beschrieben werden.

Der Prototyp kationischer Schichtverbindungen ist das Mineral Hydrotalcit [Mg₆Al₂(OH)₁₆](CO₃). 4 H₂O. Hydrotalcit leitet sich strukturell vom Brucit [Mg(OH)₂] ab. Brucit kristallisiert in einer Schichtstruktur mit den Metallionen in Oktaederlücken zwischen zwei Schichten aus hexagonal dicht gepackten (OH⁻)-Ionen, Dabei wird nur jede zweite Schicht der Oktaederlücken von Metallionen M besetzt, so daß Schichtpakete (OH)-M-(OH) entstehen. Die Zwischenschichten sind im Brucit leer, im Hydrotalcit sind einige - etwa jede zweite bis fünfte - der Mg(II)-Ionen statistisch durch Al(III)-Ionen ersetzt. Das Schichtpaket erhält dadurch insgesamt eine positive Ladung. Diese Ladung wird durch Anionen ausgeglichen, die sich zusammen mit leicht entfernbarem Kristallwasser in den Zwischenschichten befinden. Das folgende Schema 1 zeigt - schematisch - den Schichtaufbau von Hydrotalcit:

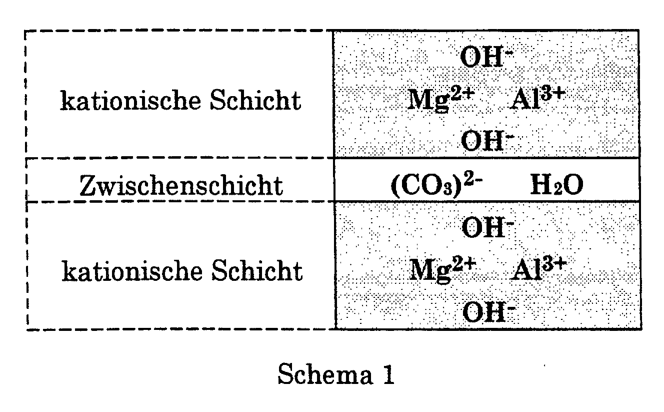

Hydrotalcite bilden pulverige, sich talkig anfühlende Massen mit BET-Oberflächen bis zu etwa 150 m²/g. Zwei Grundsynthesen sind literaturbekannt: Eine Möglichkeit der Synthese besteht darin, wäßrige Lösungen der entsprechenden Metallsalze mit Lauge zu behandeln, wobei der sich bildende Hydrotalcit ausfällt. Eine andere Möglichkeit geht von wasserunlöslichen Ausgangsverbindungen wie Metalloxiden und - hydroxiden aus. Es handelt sich hierbei um heterogene Reaktionen, die üblicherweise im Autoklaven ausgeführt werden.

Wie bereits erwähnt ist Hydrotalcit lediglich der Prototyp kationischer Schichtverbindungen. Die vom Hydrotalcit bekannten Synthesemethoden werden jedoch auch allgemein zur Synthese beliebiger kationischer Schichtverbindungen herangezogen. Wie dem Fachmann bekannt lassen sich diese Synthesemethoden ganz allgemein als Hydrothermalsynthese klassifizieren. Unter Hydrothermalsynthese im engeren Sinne versteht man dabei die Synthese von Mineralien aus hocherhitzten - oberhalb einer Temperatur von 100 °C und einem Druck von 1 atm - wäßrigen Suspensionen; Hydrothermalsynthesen werden meist in Druckgefäßen ausgeführt, da die angewendeten Temperaturen weit über der Siedetemperatur des Wassers liegen, meist sogar über dessen kritischer Temperatur (vergleiche **Römpps Chemie-Lexikon,** ^{**7**}**1973, S. 1539**)

Bevorzugt im Sinne der Erfindung sind solche kationische Schichtverbindungen (I), in der Z für mindestens ein zweiwertiges Metallion, ausgewählt aus der Gruppe Magnesium, Calcium und Zink steht. Bevorzugt steht Z für genau ein zweiwertiges Metallion aus der genannten Gruppe und insbesondere für Magnesium. Ganz besonders bevorzugt werden kationische Schichtverbindungen der allgemeinen Formel I, in denen Aⁿ⁻ für ein Säureanion mit der Ladung (n-) ausgewählt aus der Anionengruppe Carbonat, Hydrogencarbonat, Perchlorat, Acetat, Nitrat, Tartrat, Oxalat und Jodid steht, vorzugsweise für Carbonat. Wenn bei der Erläuterung zu obiger Formel I von mindestens einem zweiwertigen Metallion die Rede ist, so bedeutet dies, daß in der kationischen Schichtverbindung unterschiedliche zweiwertige Metallionen nebeneinander vorliegen können. Die Indices x, y und z sowie m können ganze oder gebrochene Zahlen innerhalb der angegebenen Bedingungen sein. Besonders vorteilhaft sind kationische Schichtverbindungen der allgemeinen Formel I, in der Z für Magnesium und Aⁿ⁻ für Carbonat steht.

Die BET-Oberfläche der erfindungsgemäß einzusetzenden kationischen Schichtverbindungen (I) ist an sich nicht kritisch. Vorzugsweise werden jedoch solche Schichtverbindungen (I) eingesetzt, deren BET-Oberfläche oberhalb von 50 m²/g liegt. In einer bevorzugten Ausführungsform der vorliegenden Erfindung werden dabei solche Schichtverbindungen (I) verwendet, die eine mittlere Teilchengröße im Bereich von 20 bis 50 µm aufweisen.

Beispiele für geeignete kationische Schichtverbindungen sind synthetische Hydrotalcite, die auch als basische Aluminium-Magnesium-Carbonate bezeichnet werden und die allgemein nach dem in der deutschen Auslegeschrift **DE-B-15 92 126** und den in der deutschen Offenlegungsschriften **DE-A-20 61 114** oder **DE-A 29 05 256** beschriebenen Verfahren hergestellt werden können.

Als Quelle zweiwertiger Metallionen kommen deren Carbonate, Hydroxocarbonate, Hydroxide, Oxide oder deren wasserlösliche Salze wie beispielsweise die Nitrate, Chloride, Sulfate oder Perchlorate in Betracht. Besonders bevorzugt ist es, solche Quellen zweiwertiger Metallionen zu wählen, die bereits das Anion Aⁿ⁻ enthalten. In diesem Falle ist es nicht erforderlich, eine zusätzliche Quelle dieser Anionen zuzusetzen. Beispielsweise ist es besonders bevorzugt, zumindest einen Teil der zweiwertigen Metallionen als Carbonate oder als Hydroxocarbonate einzusetzen. Verwendet man als Quelle zweiwertiger Metallionen ausschließlich deren Oxide oder Hydroxide, ist es erforderlich, eine zusätzliche Quelle der Anionen Aⁿ⁻ einzusetzen, beispielsweise in Form von Alkalimetallsalzen. Dabei sind Alkalimetallsalze der Kohlensäure und/oder von Oxosäuren von Halogenen wie beispielsweise der Perchlorsäure bevorzugt, die in Mengen von 1 bis 100 Mol-% bezüglich des Aluminiumgehalts der Reaktionsmischung zugesetzt werden können. Beispielsweise kann dem Reaktionsansatz Natriumcarbonat zugesetzt werden.

Als Aluminiumquelle kann sowohl feinteiliges, aktives Aluminium-(III)-hydroxid in Kombination mit Natriumhydroxid als auch NaAlO₂ eingesetzt werden. Ferner Aluminiumchlorid, -bromid, -nitrat- und -sulfat.

Ein weiterer Gegenstand der vorliegenden Erfindung sind kationische Schichtverbindungen, die dadurch erhältlich sind, daß man Schichtverbindungen der allgemeinen Formel (I)

[EₑZ_{z}D_{d}Vᵥ(OH⁻)ₓ](Aⁿ⁻)ₐ · q H₂O (I)

worin bedeuten:
- E ein einwertiges Kation aus der Gruppe der Alkalimetalle,
- e eine Zahl im Bereich von 0 bis 2,
- Z ein zweiwertiges Metall-Kation,
- z eine Zahl im Bereich von 0 bis 6,
- D ein dreiwertiges Metall-Kation,
- d eine Zahl im Bereich von 0 bis 3,
- V ein vierwertiges Metall-Kation,
- v eine Zahl im Bereich von 0 bis 1,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und e + 2z + 3d + 4v = x + na ist,
in wäßrigem Milieu einer alkali-induzierten Reifung unterwirft, wobei man den Gehalt des wäßrigen Mediums an Alkalihydroxid im Bereich von 1- bis 6-molar, die Kristallisationstemperatur im Bereich von 60 bis 100 °C und die Kristallisationsdauer im Bereich von 2,5 bis 50 Stunden einstellt.

Ein weiterer Gegenstand der vorliegenden Erfindung sind Mittel zum Stabilisieren von halogenhaltigen Kunststoffen gegen thermischen oder photochemischen Abbau, enthaltend kationische Schichtverbindungen, die dadurch erhältlich sind, daß man Schichtverbindungen der allgemeinen Formel (I)

[EₑZ_{z}D_{d}Vᵥ(OH⁻)ₓ](Aⁿ⁻)ₐ · q H₂O (I)

worin bedeuten:
- E ein einwertiges Kation aus der Gruppe der Alkalimetalle,
- e eine Zahl im Bereich von 0 bis 2,
- Z ein zweiwertiges Metall-Kation,
- z eine Zahl im Bereich von 0 bis 6,
- D ein dreiwertiges Metall-Kation,
- d eine Zahl im Bereich von 0 bis 3,
- V ein vierwertiges Metall-Kation,
- v eine Zahl im Bereich von 0 bis 1,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und e + 2z + 3d + 4v = x + na ist,
in wäßrigem Milieu einer alkali-induzierten Reifung unterwirft, wobei man den Gehalt des wäßrigen Mediums an Alkalihydroxid im Bereich von 1- bis 6-molar, die Kristallisationstemperatur im Bereich von 60 bis 100 °C und die Kristallisationsdauer im Bereich von 2,5 bis 50 Stunden einstellt.

Die erfindungsgemäß hergestellten Substanzen können in vorteilhafter Weise als Stabilisatoren für halogenhaltige thermoplastische Massen verwendet werden. Beispiele für derartige Harze sind PVC, Polyvinylidenchlorid, chloriertes oder chlorsulfoniertes Polyethylen, chloriertes Polypropylen oder chlorierte Ethylen/Vinylacetat-Copolymere. Besonders geeignet sind die erfindungsgemäß hergestellten kationischen Schichtgitterverbindungen als Stabilisatoren für Harze vom PVC-Typ, worunter einerseits Vinylchlorid-Homopolymere, andererseits Copolymere von Vinylchlorid mit anderen Monomeren zu verstehen sind.

Ein weiterer Gegenstand der vorliegenden Erfindung ist dementsprechend die Verwendung kationischer Schichtverbindungen, die dadurch erhältlich sind, daß man Schichtverbindungen der allgemeinen Formel (I)

[EₑZ_{z}D_{d}Vᵥ(OH⁻)ₓ](Aⁿ⁻)ₐ · q H₂O (I)

worin bedeuten:
- E ein einwertiges Kation aus der Gruppe der Alkalimetalle,
- e eine Zahl im Bereich von 0 bis 2,
- Z ein zweiwertiges Metall-Kation,
- z eine Zahl im Bereich von 0 bis 6,
- D ein dreiwertiges Metall-Kation,
- d eine Zahl im Bereich von 0 bis 3,
- V ein vierwertiges Metall-Kation,
- v eine Zahl im Bereich von 0 bis 1,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und e + 2z + 3d + 4v = x + na ist,
in wäßrigem Milieu einer alkali-induzierten Reifung unterwirft, wobei man den Gehalt des wäßrigen Mediums an Alkalihydroxid im Bereich von 1- bis 6-molar, die Kristallisationstemperatur im Bereich von 60 bis 100 °C und die Kristallisationsdauer im Bereich von 2,5 bis 50 Stunden einstellt, zum Stabilisieren von halogenhaltigen Kunststoffen gegen thermischen oder photochemischen Abbau.

Bevorzugt ist dabei die Verwendung der erfindungsgemäß hergestellten kationischen Schichtverbindungen als Co-Stabilisatoren für mit Calcium- und/oder Zinksalzen von Carbonsäuren mit 6 bis 22 C-Atomen stabilisierte halogenhaltige Kunststoffe. Insbesondere werden die erfindungsgemäß hergestellten kationischen Schichtverbindungen als Co-Stabilisatoren in Polyvinylchlorid eingesetzt. Dazu werden die kationischen Schichtverbindungen - ohne Berücksichtigung des Anteils der gegebenenfalls vorhandenen organischen Additive - in Mengen von 0,01 bis 5, vorzugsweise 0,1 bis 3 Gew.-Teilen - bezogen auf 100 Gew.-Teile Kunstharze - zugesetzt. In der Regel werden sie mit den in Granulatform vorliegenden Kunststoffen mechanisch vermischt, bevor die Verformung, beispielsweise im Kalander- und Extrusionsverfahren durchgeführt wird. Meistens gleichzeitig mit den kationischen Schichtverbindungen werden die handelsüblichen Zink- und/oder Calciumsalze von Carbonsäuren mit 6 bis 22 C-Atomen als übliche Stabilisatoren eingemischt. Selbstverständlich können auch weitere konventionelle Additive, wie die in der europäischen Anmeldung EP-A-189 899 beschriebenen Hitzestabilisatoren eingesetzt werden. Die Mengen der Stabilisatoren und Co-Stabilisatoren untereinander können beliebig variieren, mit der Maßgabe, daß der Gesamtstabilisatorzusatz innerhalb der Mengengrenze von 0,5 bis 5 Gew.-Teile - bezogen auf 100 Gew.-Teile Kunstharze - liegt. Die Mindestmenge an kationischer Schichtverbindung beträgt demgemäß mindestens 0,01 Gew.-%.

Durch die Verwendung der erfindungsgemäßen kationischen Schichtverbindungen wird die Wirkung von Zink- und/oder Calciumseifen bei der Stabilisierung der halogenhaltigen Kunststoffe verbessert. Zudem sind die erfindungsgemäßen kationischen Schichtverbindungen als Co-Stabilisatoren hervorragend in den halogenhaltigen Kunststoffen einarbeitbar, ohne die Rheologie der Kunststoffe nachträglich zu beeinträchtigen.

Gewünschtenfalls können die erfindungsgemäß hergestellten kationischen Schichtverbindungen anschließend mit mindestens einem flüssigen oder niedrig schmelzenden, dispergierend wirkenden Additiv ausgewählt aus Verbindungen der nachfolgend aufgezählten Gruppen A) bis F) durch intensives Vermischen bei Raumtemperatur (15 bis 25 °C) oder einer Temperatur unterhalb der Zersetzungstemperaturen der kationischen Schichtverbindungen und/oder der Additive, vorzugsweise unterhalb 300 °C modifiziert werden. Die Gruppen A) bis F) sind:
A) Polyole mit 3 bis 30 C-Atomen und mindestens 2 Hydroxylgruppen.
B) Ester von teilweise oder vollständig epoxidierten ungesättigten Carbonsäuren mit 6 bis 22 C-Atomen.
C) Voll- und Partialester von Polyolen mit 3 bis 30 C-Atomen und 2 bis 12 Hydroxylgruppen mit Carbonsäuren mit 6 bis 22 C-Atomen.
D) Alkyl- und Arylphosphite.
E) Anionen von gesättigten oder ungesättigten Fettsäuren mit 6 bis 22 C-Atomen.
F) in Wasser mit pH-Werten über 8 lösliche Polymere mit einem Molekulargewicht von 500 bis 50000.

Als Additive der Gruppe A) kommen Polyole mit mindestens zwei Hydroxylgruppen und insgesamt 3 bis 30 C-Atomen in Betracht. Beispiele für derartige Polyole sind Diole mit 3 bis 30 C-Atomen, wie Butandiole, Hexandiole, Dodecandiole, und Polyole wie Trimethylolpropan, Pentaerythrit, Glycerin sowie deren technische Oligomergemische mit durchschnittlichen Kondensationsgraden von 2 bis 10. Ganz besonders bevorzugt werden Polyole mit 3 bis 30 C-Atomen, deren C-Skelette im Abstand von 3 C-Atomen mindestens eine Hydroxylgruppe oder einen Ethersauerstoff tragen, vorzugsweise Glycerin und/oder die technischen Oligoglyceringemische mit durchschnittlichen Kondensationsgraden von 2 bis 10. Insbesondere ist hierfür auch das als "THEIC" bekannte Tris-(2-hydroxyethyl)isocyanurat (EP-B-377 428) geeignet.

Bei den Additiven der Gruppe B) handelt es sich um Ester von teilweise oder vollständig epoxidierten ungesättigten Carbonsäuren mit 6 bis 22 C-Atomen. Geeignete Ester sind Ester von ein-, zwei- und/oder dreiwertigen Alkoholen, die vollständig mit epoxidierten ungesättigten Carbonsäuren mit 6 bis 22 C-Atomen verestert sind wie Methyl-, 2-Ethylhexyl-, Ethylenglykol-, Butandiol-, Neopentylglykol-, Glycerin- und/oder Trimethylolpropanester von epoxidierter Lauroleinsäure, Palmitoleinsäure, Ölsäure, Ricinolsäure, Linolsäure und/oder Linolensäure. Bevorzugt werden Ester von dreiwertigen Alkoholen und vollständig epoxidierten ungesättigten Carbonsäuren mit 12 bis 22 C-Atomen, und insbesondere Ester von Glycerin mit vollständig epoxidierten ungesättigten Carbonsäuren mit 12 bis 22 C-Atomen. Die Carbonsäurekomponente kann sich beispielsweise von Palmitoleinsäure, Ölsäure, Elaidinsäure, Petroselinsäure, Ricinolsäure, Linolensäure, Gadoleinsäure oder Erucasäure ableiten. Die ungesättigten Carbonsäuren werden nach bekannten Verfahren epoxidiert. Wie in der Fettchemie üblich, können die epoxidierten Carbonsäureglyceride auch technische Gemische darstellen, wie man sie durch Epoxidation von natürlichen ungesättigten Fetten und Ölen erhält. Vorzugsweise wird epoxidiertes Rüböl, epoxidiertes ungesättigtes Sojaöl und/oder epoxidiertes Sonnenblumenöl neuer Züchtung eingesetzt.

Bei den Additiven der Gruppe C) handelt es sich um Voll- oder Partialester, die nach den einschlägigen Methoden der präparativen organischen Chemie, beispielsweise durch säurekatalysierte Umsetzung von Polyolen mit Carbonsäuren erhalten werden. Als Polyolkomponente kommen dabei solche in Betracht, die bereits in der Gruppe A) besprochen wurden. Als Säurekomponente werden bevorzugt aliphatische, gesättigte und/oder ungesättigte Carbonsäuren mit 6 bis 22 C-Atomen wie Capronsäure, Caprylsäure, Caprinsäure, Laurinsäure, Myristinsäure, Palmitinsäure, Palmitoleinsäure, Stearinsäure, Ölsäure, Ricinolsäure, Linolsäure, Linolensäure, Behensäure oder Erucasäure. Wie in der Fettchemie üblich, kann die Carbonsäurekomponente auch ein technisches Gemisch darstellen, wie es bei der Druckspaltung von natürlichen Fetten und Ölen anfällt. Bevorzugt werden Partialester von Glycerin und insbesondere von dessen technischen Oligoglyceringemischen mit durchschnittlichen Kondensationsgraden von 2 bis 10 und gesättigten und/oder ungesättigten aliphatischen Carbonsäuren mit 6 bis 22 C-Atomen.

Als Additive bei Gruppe D) können Alkyl- und Arylphosphite eingesetzt werden, vorzugsweise solche der allgemeinen Formel II 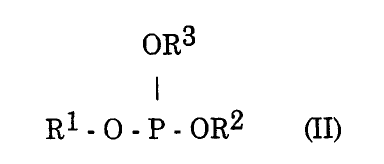 in der R¹, R² und R³ unabhängig voneinander für einen Alkylrest mit 1 bis 18 Kohlenstoffatomen oder einen Phenylrest stehen. Typische Beispiele für Additive der Gruppe D) sind Tributylphosphit, Triphenylphosphit, Dimethylphenylphosphit und/oder Dimethylstearylphosphit. Bevorzugt wird Diphenyldecylphosphit.

Als Additive der Gruppe E) kommen Anionen von gesättigten oder einoder mehrfach ungesättigten Fettsäuren mit 6 bis 22 C-Atomen in Betracht, die linear oder verzweigt sein können. Aufgrund der leichteren Verfügbarkeit sind lineare Fettsäuren bevorzugt. Dabei sind reine Fettsäuren wie beispielsweise Laurinsäure, Myristinsäure, Palmitinsäure, Stearinsäure, Lauroleinsäure, Myristoleinsäure, Palmitoleinsäure, Ölsäure, Linolsäure oder Linolensäure geeignet. Ökonomisch attraktiv ist es jedoch auch, Fettsäuregemische einzusetzen, wie sie aus der Spaltung natürlicher Öle und Fette erhältlich sind. Dabei ist es unerheblich, ob die Fettsäuren als solche oder als - vorzugsweise wasserlösliche - Salze, beispielsweise als Natrium- oder Kaliumsalze eingesetzt werden. Da die Reaktionsmischung stark alkalisch ist, wird das Reaktionsprodukt die Fettsäuren in jedem Falle in Form ihrer Anionen enthalten.

Additive der Gruppe F) sind in Wasser mit pH-Werten oberhalb 8, vorzugsweise mit pH-Werten von 9 bis 12 lösliche Polymere, die ein durchschnittliches (Zahlenmittel) Molekulargewicht von 500 bis 50000 besitzen. Der Begriff "löslich" bedeutet in diesem Zusammenhang, daß die polymeren Additive zu mehr als 0,01 Gew.-% in einer wäßrigen Lösung mit pH 10, eingestellt mit Alkalihydroxiden bei 20 °C, vorzugsweise zu mindestens 0,1 Gew.-% und insbesondere unter den angegebenen Bedingungen vollständig klar gelöst sind. Prinzipiell können als polymere Additive alle Polymere eingesetzt werden, die der Fachmann als Pigmentdispergatoren (vergleiche Kirk-Othmer "Encyclopedia of Chemical Technology", Vol. 7, third Edition, 1979, Seiten 840-841 oder Ullmann's "Encyclopedia of Industrial Chemistry", Vol A8, 5th Edition, 1987, Seiten 586-601) kennt, sofern sie die Vorraussetzungen der Löslichkeit und des Molekulargewichts erfüllen. Bevorzugt werden als polymere Additive Acrylsäure- und Methacrylsäurehomo- und -copolymere, Ligninsulfonate und Trimerfettsäuren. Insbesondere geeignet sind polymere Additive ausgewählt aus der Gruppe Polymere von Acrylsäure und Methacrylsäure sowie deren Copolymere mit sulfonsäuregruppenhaltigen ungesättigten Monomeren, phosphonsäuregruppenhaltigen ungesättigten Monomeren, ungesättigten aliphatischen Carbonsäuren mit 3 bis 5 C-Atomen, Amiden von ungesättigten aliphatischen Carbonsäuren mit 3 bis 5 C-Atomen, aminogruppenhaltigen ungesättigten Monomeren und/oder deren Salze, Vinylacetat, Vinylchlorid, Acrylnitril, Vinylidenchlorid, 1,3-Butadien, Styrol, Alkylstyrolen mit 1 bis 4 C-Atomen im Alkylrest. Beispiele dafür sind Polyacrylsäure, Polymethacrylsäure - im folgenden werden Acrylsäure und Methacrylsäure sowie deren Derivate vereinfacht als (Meth)acrylsäure bzw. Derivate abgekürzt -und/oder deren Salze wie Polynatrium(meth)acrylat, Copolymere von (Meth)acrylsäure mit Maleinsäure, Maleinsäureanhydrid, Styrolsulfonsäure, µ-Methylstyrol, 2-Vinylpyridin, 1-Vinylimidazol, Dimethylaminopropyl(meth)acrylamid, 2-(Meth)acrylamido-2-methylpropansulfonsäure, (Meth)acrylamid, N-Hydroxydimethyl(metha)acrylamid und/oder deren Salze. Ganz besonders bevorzugt unter den polymeren Additiven sind solche, die einen überwiegend anionischen Charakter aufweisen, das heißt, die mehrheitlich Säuregruppen frei oder in Form ihrer Salze tragen. Insbesondere bevorzugt sind Polymere von (Meth)acrylsäure sowie deren Copolymerisate mit Styrol, Alkylstyrolen mit 1 bis 4 C-Atomen im Alkylrest, Styrolsulfonsäure, Maleinsäure und/oder deren Salze, insbesondere deren Natriumsalze und Maleinsäureanhydrid. Zweckmäßigerweise besitzen die polymeren Additiven ein Molekulargewicht von 1000 bis 10000. Die Herstellung der polymeren Additive kann nach bekannten Verfahren wie Substanz- oder Lösungsmittelpolymerisation erfolgen (vergleiche Ullmann's Encyclopädie der technischen Chemie, Band 19, 4. Auflage, Seiten 2-11, 1980). Verfahren zur Herstellung von Ligninsulfonsäure bzw. deren Salze werden ebenfalls in Ullmann's Encyclopädie der technischen Chemie, Band 16, 4. Auflage, Seiten 254-257, 1978, beschrieben. Trimerfettsäuren sind handelsübliche Produkte, die als Rückstand bei der Dimerfettsäuredestillation anfallen, wie Pripol^{R} 1040 der Fa. Unichema oder Emery^{R} 1000 der Fa. Emery.

Unter dem Begriff der niedrig schmelzenden Additiven der Gruppen A) bis F) werden solche Additive verstanden, die unter den obengenannten Zersetzungstemperaturen bei Normaldruck in den flüssigen Zustand überführt werden können. Anstelle des intensiven Vermischens können gewünschtenfalls die nach der Herstellung erhaltenen kationischen Schichtverbindungen anschließend mit einem oder mehreren Additiven ausgewählt aus den Gruppen A) bis F) in Anwesenheit von polaren organischen Lösungsmitteln oder von Wasser vermahlen, vorzugsweise mit Mahlkörpermühlen und insbesondere mit einer Kugelmühle, getrocknet und gegebenenfalls nachgetrocknet werden. Unter dem Begriff der polaren organischen Lösungsmittel werden bei Raumtemperatur (15 bis 25 °C) flüssige Kohlenwasserstoffverbindungen verstanden, die mindestens einen elektronegativeren Substituenten als Kohlenstoff tragen. Dazu zählen Chlorkohlenwasserstoffe, Alkohole, Ketone, Ester, Ether und/oder Glykolether. Geeignete polare organische Lösungsmittel sind Methanol, Ethanol, n-Butanol, Aceton, Methylethylketon, Methylisobutylketon, Cyclohexanol, Isophoron, Ethylacetat, Milchsäureethylester, 2-Methoxyethylacetat, Tetrahydrofuran, Ethylglykolmonomethylether, Diethylenglykolmonoethylether. Für diese nachträgliche, d. h. nach Trocknung der erfindungsgemäß hergestellten kationischen Schichtverbindungen zu einem Pulver, erfolgende Modifizierung mit den organischen Additiven kommen Additivmengen zwischen etwa 5 und etwa 100 Gew.-%, bezogen auf die kationische Schichtverbindung, in Betracht.

Die Verwendung der Additive A) bis F) im Zusammenhang mit kationischen Schichtverbindungen ist im übrigen bekannt aus den Schriften **WO 92/06135, WO 92/20732** und **WO 92/20619.**

Die erfindungsgemäß hergestellten kationischen Schichtgitterverbindungen können als alleinige Stabilisatoren für halogenhaltige thermoplastische Harze verwendet werden. Vorzugsweise werden sie jedoch in Kombination mit anderen Stabilisatoren eingesetzt. Neben dem bereits erwähnten Einsatz in Kombination mit Metallseifen kommen hier vor allem 1,3-Diketonverbindungen, organische Ester der phosphorigen Säure, Polyole und Aminosäuren in Betracht.

Beispiele für 1,3-Diketonverbindungen sind: Dibenzoylmethan, Stearoylbenzoylmethan, Palmitoylbenzoylmethan, Myristoylbenzoylmethan, Lauroylbenzoylmethan, Benzoylaceton, Acetylaceton, Tribenzoylmethan, Diacetylacetobenzol, p-Methoxys und Stearolyacetophenon, Acetoessigsäureester.

Beispiele für geeignete Ester der phosphorigen Säure sind Triarylphosphite wie Triphenylphosphit, Tris(p-nonylphenyl)phosphit (TNPP); Alkylarylphosphite wie Monoalkyldiphenylphosphite, zum Beispiel Diphenylisooctylphosphit, Diphenylisodecylphosphit und Dialkylmonophenylphosphite wie Phenyldiisooctylphosphit, Phenyldiisodecylphosphit und Trialkylphosphite wie Triisooctylphosphit und Tristearylphosphit.

Beispiele für geeignete Polyole sind Trimethylolpropan, Di-(trimethylolpropan), Erythritol, Pentaerythritol, Dipentaerythritol, Sorbitol, Mannitol.

Beispiele für Aminosäurederivate sind Glycin, Alanin, Lysin, Tryptophan, Acetylmethionin, Pyrrolidoncarbonsäure, beta-Aminocrotonsäure, alpha-Aminoacrylsäure, alpha-Aminoadipinsäure sowie davon abgeleitete Ester. Diue Alkoholkomponenten dieser Ester umfassen einwertige Alkohole wie Methanol, Ethanol, Propanol, iso-Propanol, Butanol, 2-Ethylhexanol, Octanol, iso-Octanol, Laurylalkohol, Stearylalkohol, sowie Polyole wie Ethylenglykol, Propylenglykol, 1,3-Butandiol, 1,4-Butandiol, Glycerin, Diglycerin, Trimethylolpropan, Pentaerythritol, Dipentaerythritol, Sorbitol und Mannitol.

Beispiele für geeignete Epoxyverbindungen sind epoxydertes Sojaöl, epoxydiertes Rapsöl, epoxydierte Ester ungesättigter Fettsäuren wie Epoxymethyloleat, Epoxybutyloleat, epoxydierte alicyclische Substanzen, Glycidylether wie Bisphenol-A-diglycidylether, Bisphenol-Fdiglycidylether, ferner Glycidylester wie Glycidylacrylat und Glycidylmethacrylat.

Die nachfolegenden Beispiele dienen der Erläuterung der Erfindung und sind nicht einschränkend zu verstehen.

### Beispiele

### A) Herstellung der kationischen Schichtverbindungen

### Beispiel 1

| Ansatz: | | |
|---|---|---|
| **Lösung A** | 10,128 kg AlCl₃ * 6 H₂O | (42,0 mol) |
| | 10,212 kg MgCl₂ * 6 H₂O | (50,4 mol) |
| | 1,680 kg ZnCl₂ | (12,0 mol) |
| | in 42 l vollentsalztem Wasser unter leichtem Erwärmen lösen (Volumen der Lösung: ca. 561) | |
| | | |
| **Suspension B** | 4,452 kg Na₂CO₃ | (42,0 mol) |
| | in 21 l vollentsalztem Wasser lösen | |
| | 20,04 kg NaOH 50 %ig | (249,6 mol) |
| | bei der Zugabe von NaOH trat eine teilweise Ausfällung ein (Volumen der Suspension: ca. 36 l) | |

### Durchführung:

Die Suspension B wurde vorgelegt und die Lösung A innerhalb eines Zeitraumes von 30 bis 45 Minuten unter ständigem Rühren hinzugetropft (800 bis 1.100 Umdrehungen pro Minute/Flügelrührer). Dabei fiel bei zunehmender Viskosität unter leichtem Temperaturanstieg das Vorprodukt aus. Es wurde unter Vakuum mittels eines Blaubandfilters abfiltriert und mit 36 1 Wasser gewaschen. Der Filterkuchen wurde in 841 einer 4-molaren wäßrigen NaOH (erhalten aus 17,6 l 50 %iger wäßriger NaOH und 66,4 l vollentsalztem Wasser) aufgenommen und bei 80 °C 16 Stunden unter Rühren kristallisiert (Dreihalskolben mit Kühler; Rührer mit einer Umdrehungsgeschwindigkeit von 300 pro Minute). Das Produkt wurde anschließend unter Vakuum mittels eines Blaubandfilters filtriert und gut mit Wasser gewaschen. Anschließend wurde das Produkt im Vakuumtrockenschrank bei 110 °C von anhaftendem Wasser befreit. Dabei fielen 5,2 kg des getrockneten Produktes an.

### B) Anwendungstechnische Prüfungen

Die gemäß Beispiel 1 erfindungsgemäß hergestellte Substanz wurde gemäß DIN 5033 auf Farbstabilität bei thermischer Belastung geprüft. Gemäß dieser Methode wurde bei 180 °C geprüft, wobei als Prüfkörper Walzfelle dienten. Es zeigte sich, daß die Langzeit-Farbstabilität der Prüfkörper, die das gemäß Beispiel 1 hergestellte erfindungsgemäße Produkt als Stabilisator enthielten, besser war, als die Langzeitstabilität analoger Prüfkörper, die handelsübliche Stabilisatoren, zum Beispiel von Typ Alcamizer (Typ 4; Hersteller: Firma Kyowa) enthielten. Erst nach einer Prüfdauer von 180 Minuten trat eine Schwarzfärbung der Prüfkörper ein (zum Vergleich: der Alcamizer-4-haltige Prüfkörper zeigte eine Schwarzfärbung bereits nach 150 Minuten).

Bei den Prüfungen gemäß DIN 5033 wurde folgende Testrezeptur eingesetzt:

| | |
|---|---|
| PVC (Solvic 268; Fa. Solvay) | 100,0 Teile |
| Ca-Stearat | 0,5 Teile |
| Zn-Stearat | 0,5 Teile |
| Rhodiastab 50 (Fa. Rhône-Poulenc) | 0,2 Teile |
| Prüfsubstanz^{a)} | 1,0 Teile |

| | |
|---|---|
| ^{a)} Erfindungsgemäß: Substanz gemäß Beispiel 1. Zum Vergleich: Alcamizer-4 | |

Die Prüfkörper wurden hergestellt, indem man die PVC-Hartmasse und die genannten Zusatzstoffe auf einem Laborwalzwerk 5 Minuten bei 170 °C homogenisierte und plastifizierte. Aus den so hergestellten etwa 0,5 mm dicken Walzfellen wurden Probestreifen von 15 mm Breite herausgeschnitten und in einem Thermoofen bei 180 °C behandelt. Im Abstand von 15 Minuten wurden die Teststreifen aus dem Ofen herausgefahren, bis sich eine Schwarzfärbung zeigte.

## Patentansprüche

1. **Verfahren zur Herstellung** von kationische Schichtverbindungen, **dadurch gekennzeichnet, daß** man Schichtverbindungen der allgemeinen Formel (I)
[EₑZ_{z}D_{d}Vᵥ(OH⁻)ₓ](Aⁿ⁻)ₐ · q H₂O (I)
worin bedeuten:
- E ein einwertiges Kation aus der Gruppe der Alkalimetalle,
- e eine Zahl im Bereich von 0 bis 2,
- Z ein zweiwertiges Metall-Kation,
- z eine Zahl im Bereich von 0 bis 6,
- D ein dreiwertiges Metall-Kation,
- d eine Zahl im Bereich von 0 bis 3,
- V ein vierwertiges Metall-Kation,
- v eine Zahl im Bereich von 0 bis 1,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und e + 2z + 3d + 4v = x + na ist,
in wäßrigem Milieu einer alkali-induzierten Reifung unterwirft, wobei man den Gehalt des wäßrigen Mediums an Alkalihydroxid im Bereich von 1- bis 6-molar, die Kristallisationstemperatur im Bereich von 60 bis 100 °C und die Kristallisationsdauer im Bereich von 2,5 bis 50 Stunden einstellt.

2. Verfahren nach Anspruch 1, wobei v den Wert Null hat.

3. Verfahren nach Anspruch 1, wobei e den Wert Null hat.

4. Verfahren nach Anspruch 1, wobei v und e den Wert Null haben.

5. Verfahren nach Anspruch 1, wobei e und v den Wert Null haben, d den Wert eins, D Aluminium bedeutet und x eine Zahl im Bereich von 1 bis 5 ist.

6. **Kationische Schichtverbindungen,** die dadurch erhältlich sind, daß man Schichtverbindungen der allgemeinen Formel (I)
[EₑZ_{z}D_{d}Vᵥ(OH⁻)ₓ](Aⁿ⁻)ₐ · q H₂O (I)
worin bedeuten:
- E ein einwertiges Kation aus der Gruppe der Alkalimetalle,
- e eine Zahl im Bereich von 0 bis 2,
- Z ein zweiwertiges Metall-Kation,
- z eine Zahl im Bereich von 0 bis 6,
- D ein dreiwertiges Metall-Kation,
- d eine Zahl im Bereich von 0 bis 3,
- V ein vierwertiges Metall-Kation,
- v eine Zahl im Bereich von 0 bis 1,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und e + 2z + 3d + 4v = x + na ist,
in wäßrigem Milieu einer alkali-induzierten Reifung unterwirft, wobei man den Gehalt des wäßrigen Mediums an Alkalihydroxid im Bereich von 1- bis 6-molar, die Kristallisationstemperatur im Bereich von 60 bis 100 °C und die Kristallisationsdauer im Bereich von 2,5 bis 50 Stunden einstellt.

7. **Mittel** zum Stabilisieren von halogenhaltigen Kunststoffen gegen thermischen oder photochemischen Abbau, enthaltend kationische Schichtverbindungen, die dadurch erhältlich sind, daß man Schichtverbindungen der allgemeinen Formel (I)
[EₑZ_{z}D_{d}Vᵥ(OH⁻)ₓ](Aⁿ⁻)ₐ · q H₂O (I)
worin bedeuten:
- E ein einwertiges Kation aus der Gruppe der Alkalimetalle,
- e eine Zahl im Bereich von 0 bis 2,
- Z ein zweiwertiges Metall-Kation,
- z eine Zahl im Bereich von 0 bis 6,
- D ein dreiwertiges Metall-Kation,
- d eine Zahl im Bereich von 0 bis 3,
- V ein vierwertiges Metall-Kation,
- v eine Zahl im Bereich von 0 bis 1,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und e + 2z + 3d + 4v = x + na ist,
in wäßrigem Milieu einer alkali-induzierten Reifung unterwirft, wobei man den Gehalt des wäßrigen Mediums an Alkalihydroxid im Bereich von 1- bis 6-molar, die Kristallisationstemperatur im Bereich von 60 bis 100 °C und die Kristallisationsdauer im Bereich von 2,5 bis 50 Stunden einstellt.

8. **Verwendung** kationischer Schichtverbindungen, die dadurch erhältlich sind, daß man Schichtverbindungen der allgemeinen Formel (I)
[EₑZ_{z}D_{d}Vᵥ(OH⁻)ₓ](Aⁿ⁻)ₐ · q H₂O (I)
worin bedeuten:
- E ein einwertiges Kation aus der Gruppe der Alkalimetalle,
- e eine Zahl im Bereich von 0 bis 2,
- Z ein zweiwertiges Metall-Kation,
- z eine Zahl im Bereich von 0 bis 6,
- D ein dreiwertiges Metall-Kation,
- d eine Zahl im Bereich von 0 bis 3,
- V ein vierwertiges Metall-Kation,
- v eine Zahl im Bereich von 0 bis 1,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und e + 2z + 3d + 4v = x + na ist,
in wäßrigem Milieu einer alkali-induzierten Reifung unterwirft, wobei man den Gehalt des wäßrigen Mediums an Alkalihydroxid im Bereich von 1- bis 6-molar, die Kristallisationstemperatur im Bereich von 60 bis 100 °C und die Kristallisationsdauer im Bereich von 2,5 bis 50 Stunden einstellt,
zum Stabilisieren von halogenhaltigen Kunststoffen gegen thermischen oder photochemischen Abbau.

9. Verwendung gemäß Anspruch 8 zum Stabilisieren von halogenhaltigen Kunststoffen, die als primäre Stabilisatoren Calcium- und/oder Zinksalze von Carbonsäuren mit 6 bis 22 C-Atomen enthalten, gegen thermischen oder photochemischen Abbau.

10. Verwendung gemäß Anspruch 9, wobei es sich bei den halogenhaltigen Kunststoffen um Polyvinylchlorid- Homo- oder -Copolymere handelt.

## Claims

1. A process for the production of cationic layer compounds, **characterized in that** layer compounds corresponding to general formula (I):
[EₑZ_{z}D_{d}Vᵥ(OH⁻)ₓ](Aⁿ⁻)ₐ A q H₂O (I)
in which
- E is a monovalent cation from the group of alkali metals,
- e is a number of 0 to 2,
- Z is a divalent metal cation,
- z is a number of 0 to 6,
- D is a trivalent metal cation,
- d is a number of 0 to 3,
- V is a tetravalent metal cation,
- v is a number of 0 to 1,
- (Aⁿ⁻) is an acid anion with the charge n- where n is an integer of 1 to 3,
- q is a number of 1 to 10,
with the proviso that x > a and e + 2z + 3d + 4v = x + na,
are subjected to alkali-induced ripening in aqueous medium, the alkali metal hydroxide content of the aqueous medium being adjusted to a value in the 1-to 6-molar range, the crystallization temperature being adjusted to a value in the range from 60 to 100°C and the crystallization time being adjusted to a value in the range from 2.5 to 50 hours.

2. A process as claimed in claim 1, **characterized in that** v has the value zero.

3. A process as claimed in claim 1, **characterized in that** e has the value zero.

4. A process as claimed in claim 1, **characterized in that** v and e have the value zero.

5. A process as claimed in claim 1, **characterized in that** e and v have the value zero, d has the value one, D stands for aluminium and x is a number of 1 to 5.

6. Cationic layer compounds obtainable by subjecting layer compounds corresponding to general formula (I):
[EₑZ_{z}D_{d}Vᵥ(OH⁻)ₓ](Aⁿ⁻)ₐ A q H₂O (I)
in which
- E is a monovalent cation from the group of alkali metals,
- e is a number of 0 to 2,
- Z is a divalent metal cation,
- z is a number of 0 to 6,
- D is a trivalent metal cation,
- d is a number of 0 to 3,
- V is a tetravalent metal cation,
- v is a number of 0 to 1,
- (Aⁿ⁻) is an acid anion with the charge n- where n is an integer of 1 to 3,
- q is a number of 1 to 10,
with the proviso that x > a and e + 2z + 3d + 4v = x + na,
to alkali-induced ripening in aqueous medium, the alkali metal hydroxide content of the aqueous medium being adjusted to a value in the 1- to 6-molar range, the crystallization temperature being adjusted to a value in the range from 60 to 100°C and the crystallization time being adjusted to a value in the range from 2.5 to 50 hours.

7. Compositions for stabilizing halogen-containing plastics against thermal or photochemical degradation containing cationic layer compounds obtainable by subjecting layer compounds corresponding to general formula (I):
[EₑZ_{z}D_{d}Vᵥ(OH⁻)ₓ](Aⁿ⁻)ₐ A q H₂O (I)
in which
- E is a monovalent cation from the group of alkali metals,
- e is a number of 0 to 2,
- Z is a divalent metal cation,
- z is a number of 0 to 6,
- D is a trivalent metal cation,
- d is a number of 0 to 3,
- V is a tetravalent metal cation,
- v is a number of 0 to 1,
- (Aⁿ⁻) is an acid anion with the charge n- where n is an integer of 1 to 3,
- q is a number of 1 to 10,
with the proviso that x > a and e + 2z + 3d + 4v = x + na,
to alkali-induced ripening in aqueous medium, the alkali metal hydroxide content of the aqueous medium being adjusted to a value in the 1- to 6-molar range, the crystallization temperature being adjusted to a value in the range from 60 to 100°C and the crystallization time being adjusted to a value in the range from 2.5 to 50 hours.

8. The use of cationic layer compounds obtainable by subjecting layer compounds corresponding to general formula (I):
[EₑZ_{z}D_{d}Vᵥ(OH⁻)ₓ](Aⁿ⁻)ₐ A q H₂O (I)
in which
- E is a monovalent cation from the group of alkali metals,
- e is a number of 0 to 2,
- Z is a divalent metal cation,
- z is a number of 0 to 6,
- D is a trivalent metal cation,
- d is a number of 0 to 3,
- V is a tetravalent metal cation,
- v is a number of 0 to 1,
- (Aⁿ⁻) is an acid anion with the charge n- where n is an integer of 1 to 3,
- q is a number of 1 to 10,
with the proviso that x > a and e + 2z + 3d + 4v = x + na,
to alkali-induced ripening in aqueous medium, the alkali metal hydroxide content of the aqueous medium being adjusted to a value in the 1- to 6-molar range, the crystallization temperature being adjusted to a value in the range from 60 to 100°C and the crystallization time being adjusted to a value in the range from 2.5 to 50 hours,
for stabilizing halogen-containing plastics against thermal or photochemical degradation.

9. The use claimed in claim 8 for stabilizing halogen-containing plastics containing calcium and/or zinc salts of carboxylic acids containing 6 to 22 carbon atoms as primary stabilizers against thermal or photochemical degradation.

10. The use claimed in claim 9, **characterized in that** the halogen-containing plastics are polyvinyl chloride homopolymers or copolymers.

## Revendications

1. Procédé pour la préparation de composés stratifiés cationiques, dans lequel on soumet à une maturation induite par un alcali, en milieu aqueux, des composés stratifiés de formule générale (I)
[EₑZ_{z}D_{d}Vᵥ(OH⁻)ₓ](Aⁿ⁻)ₐ.qH₂O (I)
dans laquelle :
- E représente un cation monovalent choisi dans le groupe des métaux alcalins,
- e est un nombre entier dans la plage de 0 à 2,
- Z représente un cation métallique divalent,
- z est un nombre entier dans la plage de 0 à 6,
- D représente un cation métallique trivalent,
- d est un nombre entier dans la plage de 0 à 3,
- V représente un cation métallique tétravalent,
- v est un nombre entier dans la plage de 0 à 1,
- (Aⁿ⁻) représente un anion acide de charge n-, n étant un nombre entier allant de 1 à 3, et
- q est un nombre entier dans la plage de 1 à 10,
- étant entendu que x > a et e + 2z + 3d + 4v = x + na,
en ajustant la teneur en hydroxyde de métal alcalin du milieu aqueux dans la plage de 1 à 6 Molaire, la température de cristallisation dans la plage de 60 à 100°C et la durée de cristallisation dans la plage de 2,5 à 50 heures.

2. Procédé selon la revendication 1, dans lequel v a la valeur 0.

3. Procédé selon la revendication 1, dans lequel e a la valeur 0.

4. Procédé selon la revendication 1, dans lequel v et e ont la valeur 0.

5. Procédé selon la revendication 1, dans lequel e et v ont la valeur 0, d a la valeur 1, D représente l'aluminium et x est un nombre dans la plage allant de 1 à 5.

6. Composés stratifiés cationiques qu'on peut obtenir en soumettant à une maturation induite par un alcali, en milieu aqueux, des composés stratifiés de formule générale (I)
[EₑZ_{z}D_{d}Vᵥ(OH⁻)ₓ](Aⁿ⁻)ₐ.qH₂O (I)
dans laquelle :
- E représente un cation monovalent choisi dans le groupe des métaux alcalins,
- e est un nombre entier dans la plage de 0 à 2,
- Z représente un cation métallique divalent,
- z est un nombre entier dans la plage de 0 à 6,
- D représente un cation métallique trivalent.
- d est un nombre entier dans la plage de 0 à 3.
- V représente un cation métallique tétravalent,
- v est un nombre entier dans la plage de 0 à 1,
- (Aⁿ⁻) représente un anion acide de charge n-, n étant un nombre entier allant de 1 à 3, et
- q est un nombre entier dans la plage de 1 à 10,
- étant entendu que x > a et e + 2z + 3d + 4v = x + na,
en ajustant la teneur en hydroxyde de métal alcalin du milieu aqueux dans la plage de 1 à 6 Molaire, la température de cristallisation dans la plage de 60 à 100°C et la durée de cristallisation dans la plage de 2,5 à 50 heures.

7. Agent pour la stabilisation de matières plastiques halogénées vis-à-vis de la dégradation thermique ou photochimique, contenant des composés stratifiés cationiques qu'on peut obtenir en soumettant à une maturation induite par un alcali, en milieu aqueux, des composés stratifiés de formule générale (I)
[EₑZ_{z}D_{d}Vᵥ(OH⁻)ₓ](Aⁿ⁻)ₐ.qH₂O (I)
dans laquelle :
- E représente un cation monovalent choisi dans le groupe des métaux alcalins,
- e est un nombre entier dans la plage de 0 à 2,
- Z représente un cation métallique divalent,
- z est un nombre entier dans la plage de 0 à 6,
- D représente un cation métallique trivalent,
- d est un nombre entier dans la plage de 0 à 3,
- V représente un cation métallique tétravalent,
- v est un nombre entier dans la plage de 0 à 1,
- (Aⁿ⁻) représente un anion acide de charge n-, n étant un nombre entier allant de 1 à 3, et
- q est un nombre entier dans la plage de 1 à 10,
- étant entendu que x > a et e + 2z + 3d + 4v = x + na,
en ajustant la teneur en hydroxyde de métal alcalin du milieu aqueux dans la plage de 1 à 6 Molaire, la température de cristallisation dans la plage de 60 à 100°C et la durée de cristallisation dans la plage de 2,5 à 50 heures.

8. Utilisation de composés stratifiés cationiques qu'on peut obtenir en soumettant à une maturation induite par un alcali, en milieu aqueux, des composés stratifiés de formule générale (I)
[EₑZ_{z}D_{d}Vᵥ(OH⁻)ₓ](Aⁿ⁻)ₐ.qH₂O (I)
dans laquelle :
- E représente un cation monovalent choisi dans le groupe des métaux alcalins,
- e est un nombre entier dans la plage de 0 à 2,
- Z représente un cation métallique divalent,
- z est un nombre entier dans la plage de 0 à 6,
- D représente un cation métallique trivalent,
- d est un nombre entier dans la plage de 0 à 3,
- V représente un cation métallique tétravalent,
- v est un nombre entier dans la plage de 0 à 1,
- (Aⁿ⁻) représente un anion acide de charge n-, n étant un nombre entier allant de 1 à 3, et
- q est un nombre entier dans la plage de 1 à 10,
- étant entendu que x > a et e + 2z + 3d + 4v = x + na,
en ajustant la teneur en hydroxyde de métal alcalin du milieu aqueux dans la plage de 1 à 6 Molaire, la température de cristallisation dans la plage de 60 à 100°C et la durée de cristallisation dans la plage de 2,5 à 50 heures,
pour la stabilisation de matières plastiques halogénées vis-à-vis de la dégradation thermique ou photochimique.

9. Utilisation selon la revendication 8, pour la stabilisation, vis-à-vis de la dégradation thermique ou photochimiques, de matières plastiques halogénées qui contiennent en tant que stabilisants primaires des sels de calcium et/ou de zinc d'acides carboxyliques ayant de 6 à 22 atomes de carbone.

10. Utilisation selon la revendication 9, dans laquelle les matières plastiques halogénées consistent en homo- ou copolymères de chlorure de vinyle.
